# EUROPEAN PATENT SPECIFICATION

(11) **EP 2 082 978 B1**
(45) Date of publication and mention of the grant of the patent: **18.05.2011**
(21) Application number: 08011074.5
(22) Date of filing: 18.06.2008
(51) Int. Cl.: B65G 19/20, B65G 21/22, B65G 39/20

(54) **Conveyor chain with side roller**
Förderkette mit Seitenrolle
Chaîne de convoyeur dotée d'un rouleau latéral

(30) Priority: 25.01.2008 JP 2008014732
(43) Date of publication of application: 29.07.2009
(73) Proprietor: Tsubakimoto Chain Co., Kita-ku Osaka 530-0005 (JP)
(72) Inventor: Fujiwara, Makoto, Osaka 530-0005 (JP)
(74) Representative: Prüfer & Partner GbR European Patent Attorneys

(56) References cited:
- EP-A- 1 834 906
- FR-A- 1 208 766

## Description

### FIELD OF INVENTION

The present invention relates to a conveyor chain for conveyance articles, and particularly relates to a conveyor chain with a side roller according to the preamble of claim 1, preferably which serves as a wheel which runs on a guard rail laid along a conveyance passage to support a load applied by the chain.

### BACKGROUND OF THE INVENTION

In a conveyance device, which conveys coal, iron ore and the like, a conveyance device called a reclaimer, in which a chain is trained between a driving sprocket and a driven sprocket, a scraper is secured to an attachment provided on a plate, which forms this chain, and conveyance articles along a floor surface of the conveyance device, has been known. As chains used in such a conveyance device, a conveyor chain with a side roller in the form of a wheel has been known. The wheel supports a load due to the chain by one or two guide rails laid along a conveyance passage so that a scraper or a floor surface of a conveyance device is not worn out or an excessive load is not applied to a driving source by being brought into contact between the scraper and the floor surface by the weights of the chain and scraper or the load of the conveyance articles (see for example Japanese Utility Model Publication No. Sho. 61-32896).

In such a conveyor chain with a side roller, both ends of a cylindrical bushing are respectively press-fitted into bushing holes of a pair of inner plates, and both ends of a connecting pin loosely inserted into the bushing are press-fitted into pin holes in a pair of outer plates disposed on both outsides of the pair of inner plates. Both ends or one end of the connecting pin is extended beyond the outer plate to the outside to form a side roller shaft and a side roller is mounted on the side roller shaft by a bearing.

### PROBLEMS TO BE SOLVED BY THE INVENTION

However, since in the conventional conveyor chain with a side roller, the bearing and the seal member are directly attached to a side roller shaft, there was a problem in maintenance that the replacement of the bearing and seal member is difficult.

Further, since the bearing is directly attached to the side roller shaft, the space between the inner circumferential surface of the bearing and tread on the outer circumferential surface of the side roller must be decreased so that there was often a problem in the assembly operation in that the initial assembly of the conveyor chain was often deficient.

Further, since a seal member, which prevents of entering of foreign materials into the bearing, is a one-layered structure, there were problems that sealing properties are bad and endurance of the seal member is low.

Thus, the technical problem to be solved by the invention, and the object of the present invention is to provide a conveyor chain with a side roller, in which replacement of the bearing and seal member in the conveyor chain with a side roller is facilitated and an improvement of the assembly properties of the side roller is realized and the seal performance is improved so that the long life of the seal member is realized.
EP 1834906 discloses a conveyor chain according to the preamble of claim 1, used for transferring an article conveyed on a moving member. Said conveyor chain comprises pairs of inner and outer link plates and a shaft, which extends beyond the outer link plate to form a projecting side roller shaft. A tubular body is provided to connect the conveyor chain to the moving member and a bearing is arranged at said tubular body within a hollow side roller.
FR 1,208,766 discloses a conveyor chain with a shaft having a projecting side roller shaft and a hollow side roller. A bearing supports the projecting side roller shaft and is arranged within the hollow side roller. Two seal members are arranged within the hollow side roller and form a grease pocket therebetween.

### SUMMARY OF THE INVENTION

The invention solves the above-described problems by a conveyor chain with a side roller as stated in claim 1.

A first preferred embodiment of the invention further solves the above-described problems by including a spacer ring between an end surface of the sleeve and the outer plate. An O ring is mounted between the spacer ring and an inner circumferential cutaway portion on one end surface of the sleeve.

Further, another preferred embodiment solves the above-described problems by attaching an end cap to the outer tread of the side roller beyond the bearings which mount the side roller on the shaft to enclose the space between the side roller outer ring and the shaft. The cap is either sealed with a caulking material or the side roller outer ring and the cap are tightly press-fitted.

It is noted that the expression "tightly press-fitted" in the present invention means that the outer ring of the side roller and the cap are closely brought into contact with each other so no space is formed therebetween and that both members are not slit.

According to the present invention, a conveyor chain with a side roller has pairs of inner and outer link plates, a bushing between the inner plates, and a connecting pin between the outer plates loosely inserted into the bushing. Both ends of the bushing are respectively press-fitted into bushing holes in the pair of inner plates. Both ends of the connecting pin are press-fitted into pin holes in the pair of outer plates which are disposed on both outsides of the pair of inner plates. Both ends or one end of the connecting pin is extended beyond the outer plate to the outside to form a side roller shaft. A side roller is mounted on the side roller shaft by an anti-friction bearing. A sleeve is inserted between the side roller shaft and the inner ring of the bearing. An inner seal member is provided on the side of the chain adjacent to the bearing and an outer seal member is spaced from the inner seal member to provide a grease retainer or grease pocket. Thus, since the side roller shaft and the bearing are not directly fitted to each other, the replacement of the bearing is easy. And since the grease retainer provided between two seal members traps foreign materials, which might enter from outside of the seal member, the inner seal member is protected and long life of the seal can be realized.

According to another feature of the invention, a spacer ring is provided between the end surface of the sleeve and the outer plate, and an O ring is mounted between the spacer ring and an inner circumferential step portion on the end surface of the sleeve. Thus, the space between the inner circumferential surface of the sleeve and the outer part of the side roller shaft is sealed so that the entering of foreign materials into the hollow space within the roller is prevented.

Further, according to an additional feature of the invention, a cap is mounted to the outside of the side roller covering the space within the side roller outer periphery. The cap is either sealed with a caulking material or the cap is tightly press-fitted into the side roller, so that the entering of foreign materials from the outside is prevented, so that additional high dust tightness can be realized in addition to the seal effects obtained by the above-described two seal members and O ring.

If both ends of a cylindrical bushing are respectively press-fitted into bushing holes of a pair of inner plates, both ends of a connecting pin loosely inserted into the bushing are press-fitted into pin hole of a pair of outer plates disposed on both outsides of the pair of inner plates, both ends or one end of the connecting pin is extended from the outer plate to the outside to form a side roller shaft and a side roller outer ring is provided about the side roller shaft through a bearing, and if a sleeve is inserted between the side roller shaft and an inner ring of the bearing, and a grease retainer is provided between an inner seal member provided on a chain side adjacently to the bearing and an outer seal member provided so as to be spaced from the inner seal member, so that the replacement of the bearing and the seal member of a conveyor chain with a side roller is facilitated and the improvement of assembly is realized, and the seal performance is improved whereby the long life of the seal member is realized. Any concrete embodiments of the conveyor chain with a side roller of the present invention may be adopted.

### BRIEF DESCRIPTION OF THE DRAWINGS

An example according to the present invention will be described with reference to FIGS. 1 to 4.

FIG. 1 is a cross-sectional view of a conveyor chain with a side roller according to the present invention;

FIG. 2 is an exploded view of a side roller portion of the present invention;

FIG. 3 is a cross-sectional view showing assembly steps of the side roller portion of the present invention; and

FIG. 4 is a fragmentary plan view of the conveyor chain.

### DESCRIPTION OF THE PREFERRED EMBODIMENTS

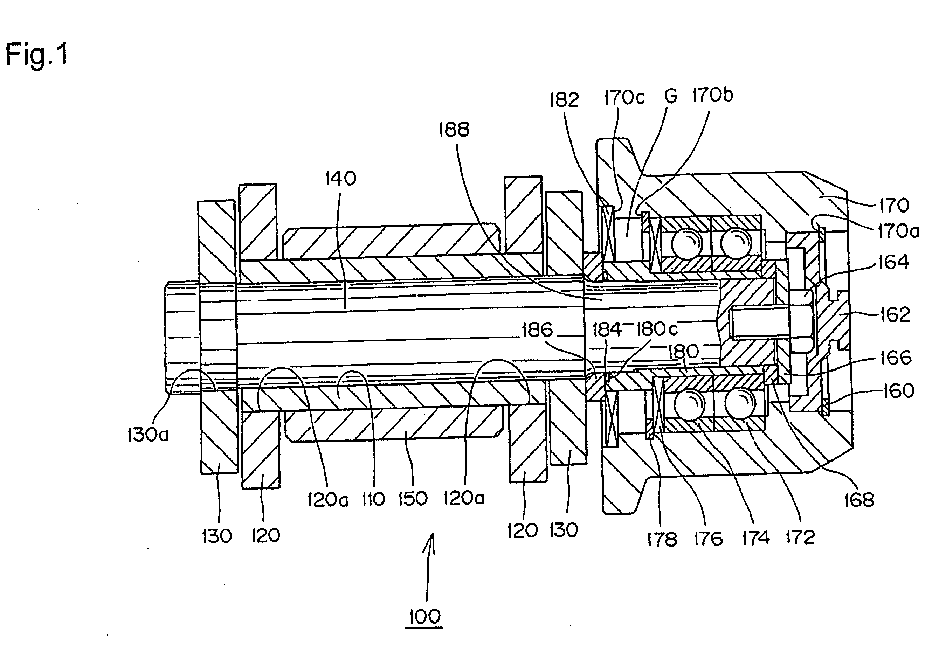

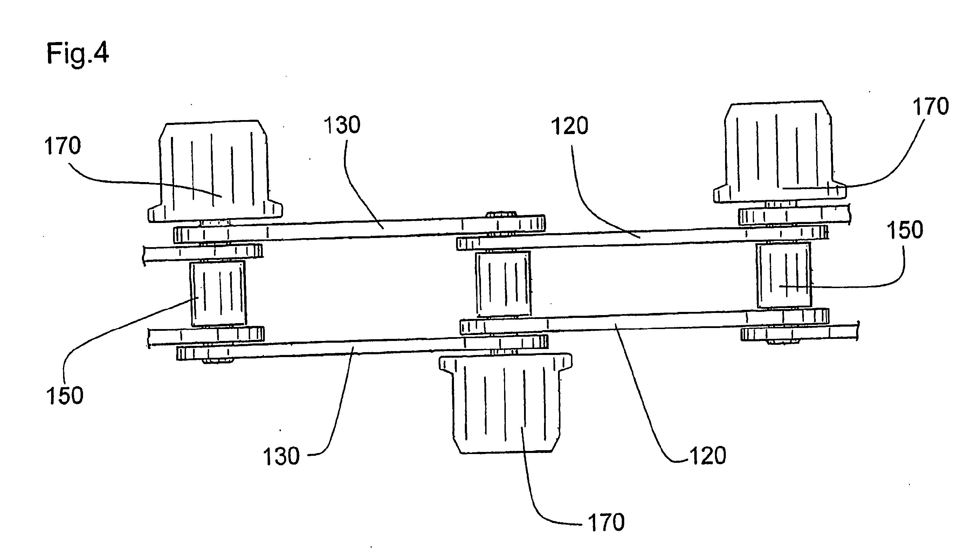

In a conveyor chain 100 with a side roller, which is an example according to the present invention, as shown in FIGS. 1 and 4, both ends of a cylindrical bushing 110 are respectively press-fitted into bushing holes 120a of a pair of inner plates 120, and both ends of a connecting pin 140 loosely inserted into the bushing 110 are press-fitted into pin holes 130a of a pair of outer plates 130 disposed on both outsides of the pair of inner plates 120. Further, a roller 150 is loosely fitted onto the bushing 110. A connecting pin 140 is extended beyond the outer plate 130 to the outside to form a projecting side roller shaft 188, and a side roller outer ring 170 is journaled on this side roller shaft 188 by two anti-friction bearings 172 and 174 arranged in parallel to the side roller shaft 188.

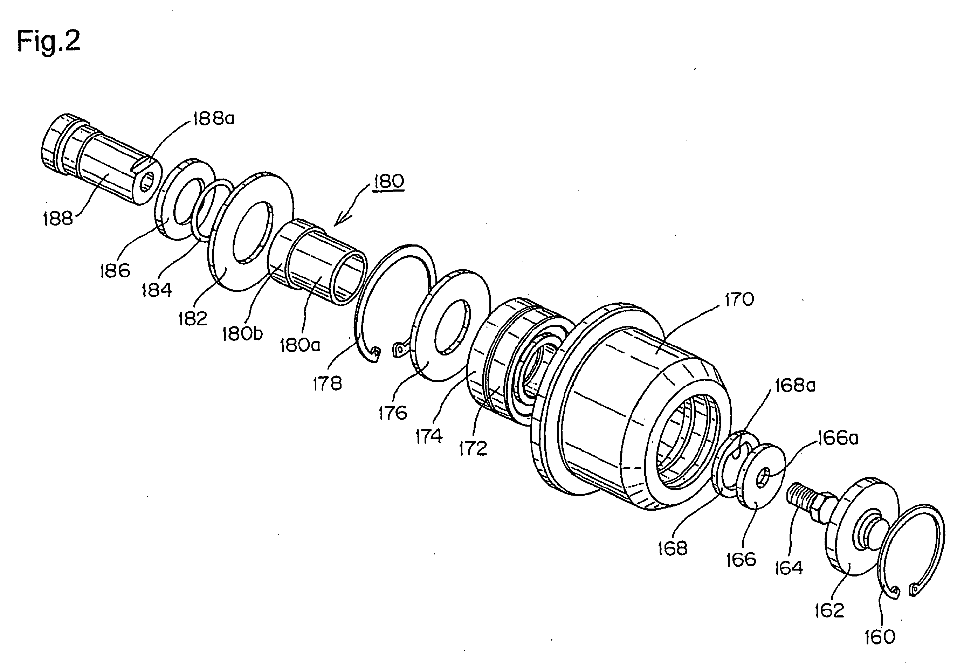

Further, as shown in FIGS. 1 and 2, between the side roller shaft 188 and inner rings of the bearings 172 and 174 is inserted a cylindrical metallic sleeve 180 having a thick wall portion 180b and a thin wall portion 180a. The bearings 172 and 174 are provided on the thin wall portion 180a of the sleeve 180. An inner seal member 176 is provided on a chain side so as to abut on the bearing 174. This inner seal member 176 is made of a steel plate and has a ring-shaped labyrinth structure in accordance with the bearing 174. The inner diameter portion of the inner seal member 176 is fitted onto an outer circumferential surface of the sleeve 180 and the outer diameter portion of the inner seal member 176 is fitted into an inner circumferential surface of the side roller outer ring 170 so that high seal performance is exhibited. The inner seal member 176 is mounted on the thin wall portion 180a of the sleeve 180 as well as the bearings 172 and 174. A C-shaped stopper ring 178 attached to a concave portion or groove 170b provided inside the side roller 170 restricts the movement of the inner seal member 176 and the bearings 172 and 174 in the axial direction.

Further, an outer seal member 182 is press-fitted between an outer circumferential surface of an end portion of the thick wall portion 180b of the sleeve 180 and an inner circumferential step portion 170c of the chain side opening portion of the side roller outer ring 170. The structure and the material of the outer seal member 182 are substantially the same as those of the inner seal member 176. However, the inner circumferential diameter and the outer circumferential diameter of the outer seal member 182 are larger than those of the inner seal member 176 by the height of the step between the thick wall portion 180b and the thin wall portion 180a. Between the inner seal member 176 and the outer seal member 182 is a sealed grease pocket to form a grease retainer G.

Further, between the thick wall portion 180b of the sleeve 180 and the outer plate 130 is arranged a spacer ring 186 and between the spacer ring 186 and the inner circumferential cutaway portion 180c is mounted an O ring 184.

A front end portion of the side roller shaft 188 forms a D-shaped cut portion 188a obtained by linearly cutting a part of the outer circumferential surface. The sleeve 180 is passed through the side roller shaft 188. A D-washer 168 having a D-shaped opening portion 168a, which fits to the D-shaped cut portion 188a of the side roller shaft 188, is engaged on the D-shaped cut portion 188a. A series of members from the spacer ring 186 to a metallic stopper 166 having a bolt insertion hole 166a at the center are secured to the side roller shaft 188 by a bolt 164 through the metallic stopper 166. A cap 162 in the side roller outer ring is covered over an opening portion opposite to the side of the outer plate 130, and the disengagement of the cap 162 is prevented by the C-shaped stopper ring 160 fitted onto a concave portion or groove 170a provided on an inner circumferential surface of the hollow side roller 170. Further, a caulking material is applied over the entire circumference of the C-shaped stopper ring 160 so that the space between the inner circumferential surface of the side roller outer ring 170 and the cap 162 is sealed.

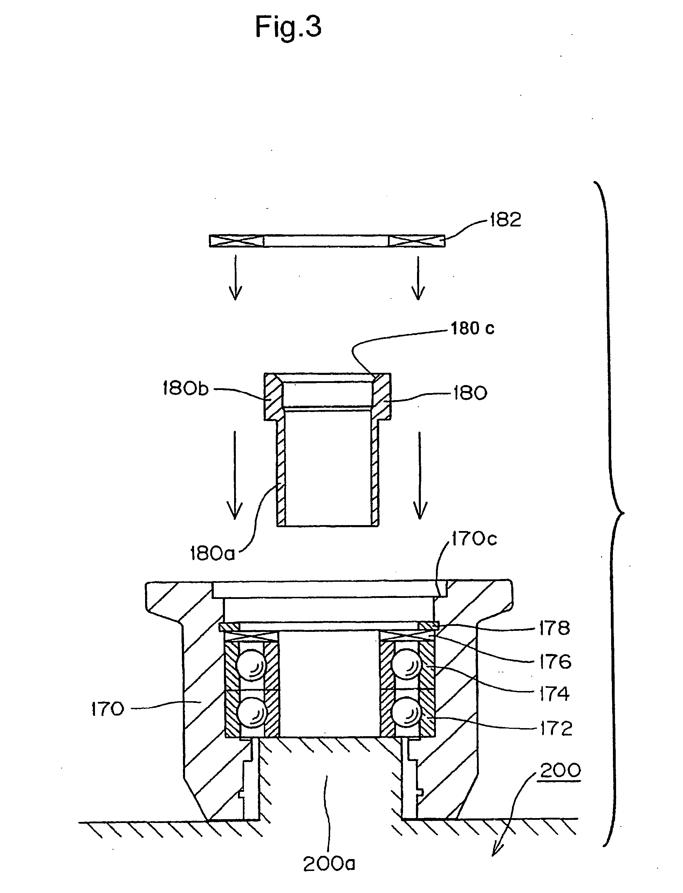

Next, referring to FIGS. 1 and 2, assembly steps of a side roller portion of the present example will be explained based on FIG. 3. When the side roller portion is assembled, a jig 200 is used, which abuts on an end surface of an opening portion of the hollow side roller on the opposite side to the chain. The jig 200 has a projecting portion 200a, which limits the displacement of the inner rings of the bearings to prevent the damage to the bearings 172 and 174 due to application of undue force to outer rings of the bearings 172 and 174. When the side hollow roller 170 is placed on this jig 200, the two bearings 172 and 174 and the inner seal member 176 are pressed into the hollow interior of the side roller 170 and then a C-shaped stopper ring 178 is mounted in the groove 170c on the hollow interior of the side roller 170 to lock the inner seal member 176 in place.

Then a sleeve 180 is press-fitted into the inner seal member 176 and the inner rings of the bearings 172 and 174 along inner circumferential surfaces thereof. Grease is pumped into a space formed by a thick wall portion 180b of the sleeve 180, the inner seal member 176 and an inner wall of the hollow side roller 170. An outer seal member 182 is press-fitted between an outer circumferential surface of an end portion of the thick wall portion 180b of the sleeve 180 and an inner circumferential step portion of a chain side opening portion of the side roller outer ring 170.

A spacer ring 186 and an O ring 184 are fitted onto the projecting side roller shaft 188 of the connecting pin 140 of the chain and a side roller assembled as described above is fitted from the above. A D-washer 168 and a stopper 166 are engaged on the exposed end of the shaft 188 and a bolt is screwed from the above. A cap 162 covers the open end of the hollow portion of the roller 170 opposite to the end confronting the outer plate 130, and the disengagement of the cap 162 is prevented by a C-shaped stopper ring 160 fitted to an concave portion or groove 170a provided on an inner circumferential surface of the hollow side roller 170. Further, a caulking material is applied to the entire surface of the C-shaped stopper ring 160 so that the space between the inner circumferential surface of the side roller outer ring 170 and the cap 162 is sealed. The assembly of a side roller portion of the present example is completed by such steps.

The present invention facilitates the replacement of the bearing and the seal member in a conveyor chain with a side roller, which is utilized in a reclaimer or the like and improves the dust tightness. Thus the present invention has very high industrial applicability.

## Claims

1. A conveyor chain (100) having a hollow side roller (170), said chain having pairs of inner and outer link plates (120, 130) **characterized in that**, said plates each having a pair of holes (120a, 130a), a cylindrical bushing (110) having both of its ends press fitted into each of said holes in said inner link plates (120), a connecting pin (140) extending between said outer link plates (130) and loosely fitting within each bushing (110), at least one end of said connecting pin (140) extending beyond said outer link plate (130) to form a projecting side roller shaft (188), and a bearing (172, 174) within said hollow side roller (170) rotatably supporting said side roller on said projecting side roller shaft (188),
wherein said bearing (172, 174) is an anti-friction bearing having an inner ring, said inner ring being mounted on said projecting shaft (188) by a sleeve (180) surrounding said projecting shaft (188), **characterized in that**, said bearing being spaced from said outer link plate (130) to provide a grease pocket (G) within said side roller (170), and
a pair seal members sealing said grease pocket (G), including an inner seal member (182) within said side roller (170) adjacent said outer link and an outer seal member (176) within said side roller (170) adjacent said bearing inner ring, said inner and outer seal members (176, 182) being spaced apart to form said grease pocket (G) within said side roller (170) between the inside of said side roller (170) and said sleeve (180).

2. A conveyor chain (100) according to claim 1 including a spacer ring (186) between the inner end of said sleeve (180) and said outer link plate (130), the inner end of said sleeve having (180) a circumferential cutaway surrounding said shaft, and an O-ring (184) within said circumferential cutaway in the inner end of said sleeve (180) and said spacer ring (186).

3. A conveyor chain (100) according to claim 1 wherein the outer end of said hollow side roller (170) is open, and includes a cap (162) attached to said open end to seal tightly between said cap (162) and said side roller (170).

4. A conveyor chain (100) according to claim 3, including caulking material between said cap (162) and the inside of said roller (170) to provide said seal.

5. A conveyor chain (100) according to claim 3, wherein said cap (162) is press fitted to the inside of said hollow side roller (180) to provide said seal.

## Patentansprüche

1. Förderkette (100), mit einer Hohlseitenwalze (170), wobei die Kette Paare bestehend aus einer inneren und einer äußeren Koppelplatte (120, 130), wobei die Platten jeweils ein Paar Löcher (120a, 130a) haben, eine zylindrische Buchse (110), deren beide Enden mittels einer Presspassung in das jeweilige Loch in der inneren Koppelplatte (120) eingepasst ist, einen Verbindungsstift (140), der sich zwischen den äußeren Koppelplatten (130) erstreckt und lose innerhalb der jeweiligen Buchse (110) eingepasst ist, wobei sich zumindest ein Ende des Verbindungsstifts (140) über die äußere Koppelplatte (130) hinaus erstreckt, um eine vorstehende Seitenwalzenwelle (188) zu bilden, und ein Lager (172, 174) innerhalb der Hohlseitenwalze (170) aufweist, das die Seitenwalze an der vorstehenden Seitenwalzenwelle (188) drehbar stützt,
wobei das Lager (172, 174) ein Anti-Reibungslager ist, das einen Innenring hat, wobei der Innenring an der vorstehenden Welle (188) durch eine Buchse (180) angebracht ist, die die vorstehende Welle (188) umgibt,
**dadurch gekennzeichnet, dass**
das Lager von der äußeren Koppelplatte (130) räumlich beabstandet ist, um innerhalb der Seitenwalze (170) eine Fetttasche (G) vorzusehen, und
ein Paar Dichtelemente, die die Fetttasche (G) abdichten, ein inneres Dichtelement (182) innerhalb der Seitenwalze (170) angrenzend an der äußeren Kopplung und ein äußeres Dichtelement (176) innerhalb der Seitenwalze (170) angrenzend an dem Lagerinnenring aufweist, wobei das innere und das äußere Dichtelement (176, 182) räumlich beabstandet sind, um die Fetttasche (G) innerhalb der Seitenwalze (170) zwischen dem Inneren der Seitenwalze (170) und der Buchse (180) zu bilden.

2. Förderkette (100) gemäß Anspruch 1, einschließlich eines Abstandsrings (186) zwischen dem inneren Ende der Buchse (180) und der äußeren Koppelplatte (130), wobei das innere Ende der Buchse (180) einen Ausschnitt in Umfangsrichtung hat, der die Welle umgibt, und eines O-Rings (184) innerhalb des Ausschnitts in Umfangsrichtung an dem inneren Ende der Buchse (180) und dem Abstandsring (186).

3. Förderkette (100) gemäß Anspruch 1, wobei das äußere Ende der Hohlseitenwalze (170) offen ist und eine Kappe (162) aufweist, die an dem offenen Ende zum festen Abdichten zwischen der Kappe (162) und der Seitenwalze (170) angebracht ist.

4. Förderkette (100) gemäß Anspruch 3, einschließlich eines Stemmmaterials zwischen der Kappe (162) und der Innenseite der Walze (170), um die Dichtung vorzusehen.

5. Förderkette (100) gemäß Anspruch 3, wobei die Kappe (162) mittels einer Presspassung in das Innere der Hohlseitenwalze (170) eingepasst ist, um die Dichtung vorzusehen.

## Revendications

1. Chaîne de convoyeur (100) ayant un rouleau latéral creux (170), ladite chaîne comprenant des paires de plaques de liaison internes et externes (120, 130), lesdites plaques ayant chacune une paire de trous (120a, 130a), une douille cylindrique (110) ayant chacune de ses extrémités ajustées par pression dans chacun desdits trous dans lesdites plaques de liaison internes (120), une broche de raccordement (140) s'étendant entre lesdites plaques de liaison externes (130) et montée sans serrage à l'intérieur de chaque douille (110), au moins une extrémité de ladite broche de raccordement (140) s'étendant au-delà de ladite plaque de liaison externe (130) afin de former un arbre de rouleau latéral en saillie (188), et un palier (172, 174) à l'intérieur dudit rouleau latéral creux (170) supportant en rotation ledit rouleau latéral sur ledit arbre de rouleau latéral en saillie (188),
dans laquelle ledit palier (172, 174) est un palier antifriction ayant une bague interne, ladite bague interne étant montée sur ledit arbre en saillie (188) grâce à un manchon (180) entourant ledit arbre en saillie (188), **caractérisée en ce que** ledit palier est espacé de ladite plaque de liaison externe (130) pour fournir une poche de graisse (G) à l'intérieur dudit rouleau latéral (170), et
une paire d'éléments d'étanchéité enfermant hermétiquement ladite poche de graisse (G), comprenant un élément d'étanchéité interne (182) à l'intérieur dudit rouleau latéral (170) adjacent à ladite liaison externe et un élément d'étanchéité externe (176) à l'intérieur dudit rouleau latéral (170) adjacent à la bague interne dudit palier, lesdits éléments d'étanchéité interne et externe (176, 182) étant espacés afin de former ladite poche de graisse (G) à l'intérieur dudit rouleau latéral (170) entre l'intérieur dudit rouleau latéral (170) et ledit manchon (180).

2. Chaîne de convoyeur (100) selon la revendication 1, comprenant une bague d'espacement (186) entre l'extrémité interne dudit manchon (180) et ladite plaque de liaison externe (130), l'extrémité interne dudit manchon (180) ayant une coupe circonférentielle entourant ledit axe, et un joint torique (184) à l'intérieur de ladite coupe circonférentielle dans l'extrémité interne dudit manchon (180) et ladite bague d'espacement (186).

3. Chaîne de convoyeur (100) selon la revendication 1, dans laquelle l'extrémité externe dudit rouleau latéral creux (170) est ouverte et comprend un capuchon (162) fixé sur ladite extrémité ouverte pour sceller hermétiquement ledit capuchon (162) sur ledit rouleau latéral (170).

4. Chaîne de convoyeur (100) selon la revendication 3, comprenant un matériau de matage entre ledit capuchon (162) et l'intérieur dudit rouleau (170) afin de fournir ledit joint.

5. Chaîne de convoyeur (100) selon la revendication 3, dans laquelle ledit capuchon (162) est ajusté par pression dans l'intérieur dudit rouleau latéral creux (170) afin de fournir ledit joint.
